# EUROPÄISCHE PATENTSCHRIFT

(11) **EP 1 208 680 B1**
(45) Veröffentlichungstag und Bekanntmachung des Hinweises auf die Patenterteilung: **26.12.2007**
(21) Anmeldenummer: 00971374.4
(22) Anmeldetag: 11.10.2000
(51) Int. Cl.: H04L 12/56

(54) **VERFAHREN ZUM BETRIEB DRAHTLOSER BASISSTATIONEN FÜR PAKETVERMITTELNDE FUNKSYSTEME MIT GARANTIERTER DIENSTGÜTE**
METHOD FOR THE OPERATION OF WIRELESS BASE STATIONS FOR PACKET TRANSFER RADIO SYSTEMS HAVING A GUARANTEED SERVICE QUALITY
PROCEDE PERMETTANT LE FONCTIONNEMENT DE STATIONS DE BASE SANS FIL POUR SYSTEMES RADIO A TRANSMISSION DE PAQUETS ET A QUALITE DE SERVICE GARANTIE

(30) Priorität: 18.10.1999 DE 19950005
(43) Veröffentlichungstag der Anmeldung: 29.05.2002
(73) Patentinhaber: Koninklijke Philips Electronics N.V., 5621 BA Eindhoven (NL); NOKIA SIEMENS NETWORKS GMBH & CO. KG, 81541 München (DE)
(72) Erfinder: WALKE, Bernhard, 52146 Würselen (DE); ESSELING, Norbert, 53229 Bonn (DE)
(74) Vertreter: Volmer, Georg
(86) Internationale Anmeldenummer: PCT/EP2000/010089
(87) Internationale Veröffentlichungsnummer: WO 2001/030024

(56) Entgegenhaltungen:
- WO-A-98/39936
- US-A- 5 610 595

## Beschreibung

### Technisches Gebiet

Die Erfindung betrifft ein neuartiges Verfahren zur Erhöhung der Versorgungsreichweite paketorientiert übertragender Funkstationen, die sich außerhalb der Reichweite einer zentralen Basisstation aufhalten und durch drahtlose Basisstationen mit Relaisfunktion versorgt werden. Im Unterschied zu üblichen drahtlos übertragenen Systemen wird hierbei eine durch Parameter wie Durchsatz, Paketverzögerungsdauer, Schwankung der Paketverzögerungsdauer usw. charakterisierte Dienstgüte für Kommunikationsbeziehungen garantiert. Praktische Einsatzfelder solcher Systeme können u.a. sein:
- Lokale Netze für die Daten- und Multimediakommunikation,
- Zugangsnetze zu Telekommunikationsnetzen,
- Netze zur Verbindung von ortsfesten und mobilen Teilnehmern, sowie mobilen Teilnehmern untereinander.

### Stand der Technik

In zukünftigen Funksysteme werden dem Benutzer eines Telekommunikationsdienstes dynamisch unterschiedliche Dienste zur V gestellt. Diese Dienste unterscheiden sich in der Anforderungen an die Dienstgüte und die benötigte Übertragungskapazität. Für die Zuteilung der zur Übertragung von Daten (inkl. Video und Audio) nötigen Kapazität an die übertragungswilligen Stationen sind verschiedene Ansätze in Funksystemen bekannt:
- Unkoordinierter Zugriff (z.B. HIPERLAN Type 1 [3] oder IEEE802.11 [7]). Hierbei greifen die übertragungswilligen Stationen zunächst unkoordiniert auf einen Funkkanal zu. Eine Koordination ergibt sich durch eine dezentrale Strategie der Zuteilung, ohne zentrale Vergabe. Dienstgüte kann in diesen Systemen nur mit gewisser Wahrscheinlichkeit oder nicht garantiert werden.
- Exklusive Zuteilung von Übertragungskapazität im Zeit/Code/Frequenzbereich an eine übertragungswillige Station, wobei sich zwei Hauptgruppen unterscheiden lassen:
   - Die Kapazität wird verbindungsorientiert mit Hilfe eines Kanals fester Übertragungsrate zugewiesen und ist damit auch gleichzeitig exklusiv reserviert für die Dauer der Verbindung (z.B. GSM [2] mit Ausnahme GPRS [4]).
   - Die Kapazität wird durch die Basisstation dynamisch je nach Bedarf [8] [1] [5] [4] an die einzelnen zugehörigen Stationen vergeben, wobei vielzellulare Systeme möglich sind. Diese Vergabe wird durch eine zentrale Station gesteuert, die entweder initial bekannt ist [5] oder von einem System selbst bestimmt wird [6]. Um eine Dienstgüte zu garantieren, sind besondere Maßnahmen (Verbindungsannahme und Scheduling, [8]) notwendig.

### Mängel bisher bekannter Ausführungen und Aufgabenstellung

Im folgenden Teil wird auf Funknetze mit zentraler Steuerung eingegangen. Eine Zuteilung von Übertrarungskapazität durch eine zentrale Vergabestelle für eine sende/empfangswillige Station (MT: eng. Mobile Terminal. Ein mobiles Terminal, dass jedoch auch ortsfest betrieben werden kann.) ist nur möglich, wenn das MT sich im Versorgungsbereich der Basisstation befindet. Ein nicht im Versorgungsbereich befindliches MT wird RMT (eng. Remote Mobile Terminal. Ein MT dessen Funkfeldverhältnisse keine direkte Funkverbindung zum AP zulassen. Das RMT kann erweiterte Funktionen gegenüber dem MT besitzen) genannt. Gründe für die unzureichende Funkversorgung des RMT können u.a. eine große Entfernung von der zentralen Basisstation (AP: eng. Access Point. Eine zentrale Station, die ortsfest oder aber beweglich sein kann. Diese Station organisiert ein ihr zugeordnetes Netz. Die Rolle der zentralen Station kann in einigen Systemen wechseln (z.B. Adhoc in HIPERLAN 2 [6]).), elektromagnetische Störung, Pegeleinbrüche durch Abschattung der Funkwellen durch Hindernisse und Mehrwegeausbreitung sein. Kann das RMT jedoch die Daten einer anderen Station (FMT: eng. Forwarder Mobile Terminal. Ein MT das zusätzlich die Aufgaben einer Relaisstation übernehmen kann und dadurch zur drahtlosen Basisstation wird.), die eine mittelbare oder unmittelbare Verbindung zum AP unterhält, in ausreichender Qualität empfangen und Daten an diese versenden, dann kann das RMT erfindungsgemäß durch die Basisstation gesteuert werden.

Das neue Verfahren steuert die Kommunikation zwischen FMT und MT bzw. RMT mit dem Ziel das RMT bzgl.der Dienstgüte einem MT gleichzustellen.

Das Verfahren erlaubt die sequentielle Aneinanderreihung von mehreren Relaisverbindungen, z.B. AP ↔ FMT ↔ ... ↔ FMT ↔ RMT. Ein FMT verhält sich gegenüber dem übergeordneten FMT, das näher zum AP liegt wie ein MT und gegenüber dem untergeordneten FMT wie ein AP.

### Erfindungsgemäße Problemlösung

Die Erfindung benutzt eine gemeinsame zeitlich ineinander greifende Kapazitätsvergabe. Die Kapazitätsvergabe für vom AP direkt erreichbare Stationen (FMT, MT) wird von der Basisstation (AP) realisiert (Bsp. [5]). Hierbei handelt es sich um die erste Funkteilstrecke (hop), gezählt von der Basisstation. Dabei kann es sich um eine aktive oder passive (schlafende), verbindungsorienrierte oder verbindungslose paketorientierte, Datenverbindung oder Signalisierverbindung handeln. Die Steuerdaten des AP zur Belegung des Funkkanals durch AP, MT und FMT des ersten hops werden zyklisch, in vorher bestimmten Abständen oder dynamisch in jeweils angekündigten oder bekannten Abständen versandt. Der AP ermöglicht allen MTs und FMT in seinem Versorgunsgbereich einen wahlfreien Zugriff, wobei der Erfolg des Zugriffs den Stationen explizit oder implizit mitgeteilt wird. Bei Kollisionen werden Mechanismen zur Kollisionsauflösung verwendet. Diese Art der dynamischen Kapazitätszutellung ist Stand der Technik und beispielhaft in [1] [8] [5] dargelegt.

Diese Art der Kanalvergabe wird in dieser Erfindung dadurch erweitert, dass einzelne MTs als drahtlose Basisstationen auftreten und dabei als Relaisstation (FMT) dienen und gegenüber RMTs als APs auftreten, gegenüber APs aber als MTs erscheinen.

Das FMT benutzt die vom AP zugeteilte Übertragungskapazität z.T. für eigene Zwecke, z.T. um den vom FMT gesteuerten RMT die Übertragung zum AP über eine zweite Funkstrecke nach gleichen oder ähnlichen Regeln zu ermöglichen, wie sie vom AP angewandt werden.

Jede als FMT genutzte Relaisstation bildet dazu ihrerseits eine Teilrahmenstruktur aus, die eingebettet ist in die von der übergeordneten zentralen Station vorgegebenen Rahmenstruktur. Dabei wird für die Teilrahmenstruktur nur die dem FMT zugewiesene Kapaziät verwendet. Der Aufbau der Teilrahmenstruktur ist der übergeordneten Rahmenstruktur ähnlich, so, dass eine Kommunikation zu unveränderten MTs, aber auch zu speziell angepaßten Stationen ist. D.h. die Teilrahmenstruktur enthält ihrerseits wieder Bereiche, in denen Kapazitätsbelegungen angekündigt werden, Antworten auf wahlfreie Zugriffe gegeben werden, ein Datentransfer zum MT (bzw.RMT) stattfinden kann (Remote-Downlink) sowie ein Datentransfer vom MT (bzw. RMT) zum FMT stattfinden kann (Remote-Uplink). Ebenso wird ein wahlfreier Zugriff zur Verfügung gestellt. Die Unterteilung in Teilrahmenstrukturen kann rekursiv erfolgen, d.h. es können mehrere Relaisverbindungen kaskadiert werden. Die Steuerung der Kommunikation und der Kapazitätsbelegungen auf den einzelnen hops kann erfolgen durch:
- Durch die Basisstation (AP), welche die Übertragungskapazität für alle mit ihr direkt bzw. indirekt, d.h. durch Relaisverbindungen bzw. kaskadierte Relaisverbindungen verbundene Stationen steuert. Den Relaisstationen (FMT) fällt damit die Aufgabe zu, die von der Basisstation bestimmte Reservierung der Übertragungskapazität an die RMTs weiterzuvermitteln und die Teilrahmen entsprechend aufzubauen.
- Unabhängig voneinander durch den AP für seine MTs und FMTs und durch die FMTs für deren RMTs. Jedes FMT besorgt sich vom AP Kapazität und verwaltet sie selbständig wie ein AP. Dies kann bei bestehenden Systemen (z.B. H/2 [5]), der für dieses FMT zugewiesene Uplink-Bereich sein. Diese Vorgehensweise hat den Vorteil, dass an bestehenden Systemen (insbesondere AP und MT) keine Änderung vorgenommen werden muß, da sich die Teilrahmenstruktur vollständig in die bereits bestehende Rah-menstruktur integriert. Es kommt nur die neue Funktionen des FMT hinzu. Die dem FMT zugeordnete Übertragungskapazität wird weitgehend autonom vom FMT verwaltet und so organisiert, dass die RMTs über den FMT den AP erreichen, bzw. vom AP erreicht werden.
- Jede beliebige Kombination aus Steuerung durch FMT und AP.

Für die Realisierung des FMT ist aufgrund der zeitlichen Struktur, d.h. der Aufteilung der Übertragungskapazität in eine zeitliche Rahmenstruktur und Untergliederung in weitere zeitliche Teilrahmenstrukturen nur ein Sende/Empfangsteil ausreichend. Ggf. können mehrerer Sende/Empfangsteile pro FMT benutzt werden. Die Länge der Rahmen des AP und Teilrahmen des FMT können dynamisch variieren und unterschiedlich lang sein. Ebenso ist eine dynamische Umordnung der Phasen innerhalb der Rahmen möglich, die auch das Fehlen einzelner Phasen, sowie die Verwendung neuer Phasen einschließt. Weiterhin können die Phasen für Datenübermittlung im Rundsendemodus (point-to-multipoint) betrieben werden. Neben diesem Modus ist es möglich, eine direkte Datenübertragung zwischen einzelnen RMT und zwischen RMT und MT, die nicht als FMT arbeiten zu organisieren.

Neben der Zuweisung von Zeitbereichen (TDMA) für die Teilrahmen ist auch eine Zuweisung von Frequenzbereichen (FDMA) und Codebereichen (CDMA) möglich. Entscheidend ist, dass die zentrale Basisstation, die ihr zur Verfügung stehende Kapazität in Teilkapazitäten zerlegt, die ihrerseits den einzelnen Relaistationen (FMT) zugeordnet werden. Hierzu wird die oben beschriebene Verwaltung dieser Teilbereiche und die Vergabe einzelner Stücke dieser Teilbereiche an die MTs bzw. RMTs verwendet. In geeigneten Systemen (z.B. H/2-adhoc [6]) kann zusätzlich jedes MT zum AP werden, wobei es relativ dazu wieder RMTs gibt.

Bei geeigneten Funkverhältnissen ist es mit Hilfe des vorgestellten Verfahrens ebenfalls möglich, eine räumliche Zuweisung von Übertragungskapazität so vorzunehmen, dass die Teilrahmenstruktur parallel an verschiedenen Orten des zentral gesteuerten Netzes verwendet wird.

Für die Sicherstellung einer geforderten Dienstgüte ist die Möglichkeit der gezielten und organisierten Vergabe von Übertragungskapazität Voraussetzung. Die Einhaltung der Dienstgüte obliegt den Einheiten (AP, FMT), die eine Verteilung der ihnen verfügbaren Kapazität für die Übertragung der einzelnen Stationen steuern. Geeignete Strategien sind in ihren Grundzügen bereits bekannt [8] und können für diese Erfindung adaptiert werden. Die nötigen Änderungen bestehen in der Berücksichtigung der benötigten Kapazität für die Organisation der einzelnen Teilrahmenstrukturen, wie sie oben beschrieben sind.

### Ausführungsbeispiel

Ein Ausführungsbeispiel ist in den Zeichnungen dargestellt und wird im folgenden näher beschrieben. Als Beispiel für die Erfindung wird im weiteren eine Erweiterung des HIPERLAN 2 (H/2) Systems [5] betrachtet. Es zeigen:
- Fig. 1: ein für die Erfindung anwendbares Szenario, bzw. die Anordnung der jeweiligen Stationen,
- Fig.2: die aus dem H/2-System bekannte Rahmenstruktur auf der Funkschnittstelle und
- Fig.3: die für die Erfindung relevante Rahmenstruktur, wie sie in dieser Erfindung als Beispiel für H/2 vorgeschlagen wird.

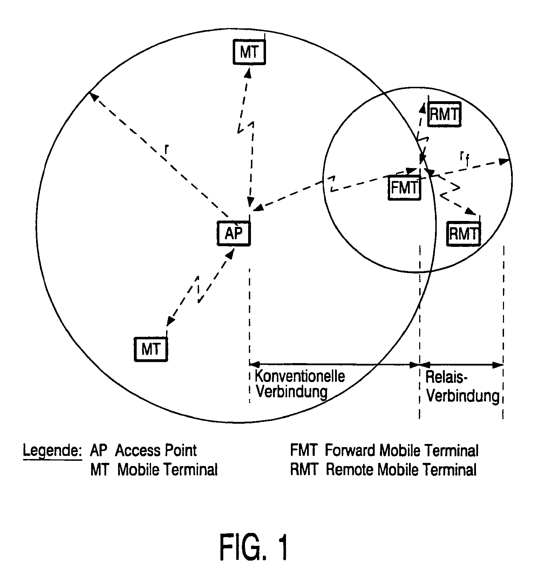

In Fig.1 wir eine beispielhafte Situation gezeigt, wie sie in Paketfunknetzen auftreten kann. Dabei ist ein H/2-System gezeigt, das im sog. "centralized mode" arbeitet. D.h. die einzelnen Terminals des Systems werden durch die Basisstation (AP) gesteuert. Daneben gibt es den "direct mode" bei dem mobile Terminals unter Steuerung durch den AP direkt miteinander kommunizieren können. Der direct mode setzt voraus, dass alle Terminals einer Zelle die Organisationsinformation des AP unmittelbar empfangen können. Nimmt man an, dass *r* der Radius der Zelle ist, in dem die einzelnen MTs den AP empfangen können und auch mit dem AP Informationen austauschen können, so sind die RMTs außerhalb dieser Reichweite bzw. aufgrund der Funkverhältnisse nicht in der Lage, Daten mit dem AP auszutauschen.

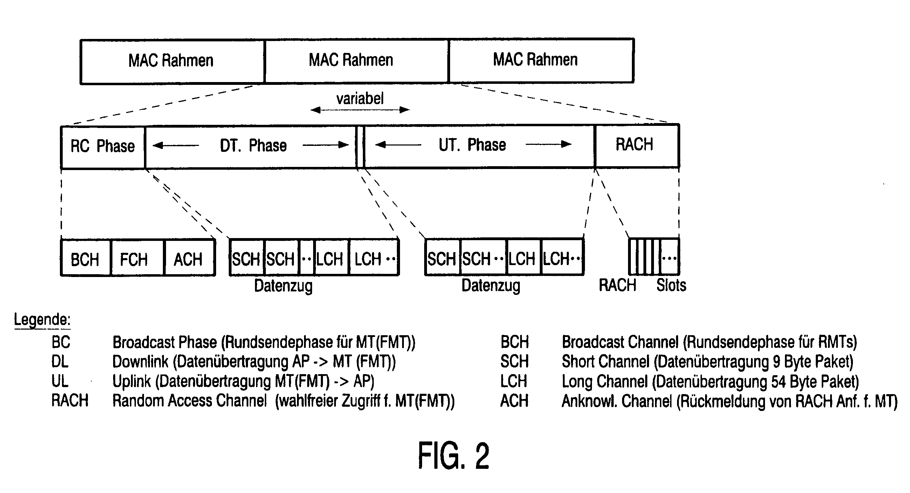

Die Erfindung betrachtet Lösungen zur Verbindung von RMTs über APs. Voraussetzung dafür ist, dass das RMT sich innerhalb des Radius *r*_{f} um ein MT befindet. Diese MTs werden dann als Relaisstationen (FMT) genutzt, die eine Brücke zwischen AP und RMT bilden und Daten bidirektional übermitteln können. Die Übermittlung der Daten wird im H/2-System durch den AP gesteuert. Dazu wird eine periodische Rahmenstruktur ausgesandt, die in verschiedene Teilbereiche aufgegliedert ist. In Fig.2 ist die zeitliche Struktur dargestellt, wie sie im H/2-System verwendet wird.

Zunächst werden im sog. Broadcast-Channel (Rundsendekanal) allgemeine Informationen über die Zelle und den zugehörigen AP versandt. Daran anschließend versendet der AP Organisationsdaten im FCCH (Frame Control Channel) über die zukünftige Belegung des verbleibenden MAC-Rahmens, dessen Gesamtlänge in H/2 konstant 2*ms* beträgt. Im folgenden ACH (Acknowledgement Channel, Bestätigungskanal) wird den Terminals der Erfolg bzgl. des Zugriffs auf den im folgenden erklärten Kanal für den wahlfreien Zugriff mitgeteilt. Daran schließt sich die Downlink-Phase an, in der Daten vom AP zu den einzelnen MTs versandt werden. Diese Daten können in langen Protokolldateneinheiten von 54 Byte (LCH, Long Channel) oder kurzen Dareneinheiten von 9 Byte (SCH, Short Channel) versandt werden. Zusätzlich ist es möglich, die einzelnen Dateneinheiten zu Datenzügen zusammenzufassen. In der Uplink-Phase haben die einzelnen mobilen Terminals Gelegenheit, ihre Daten an den AP zu senden. Zu welchem Zeitpunkt jedes einzelne Terminal senden darf, wird bereits im FCCH mitgeteilt. Zum Ende des MAC-Rahmens gibt es eine Phase in der alle Terminals nach bestimmten Regeln wahlfrei auf den Funkkanal zugreifen dürfen. Diese Phase wird als RACH (Random Access Channel) bezeichnet und ist in H/2 festgelegt.

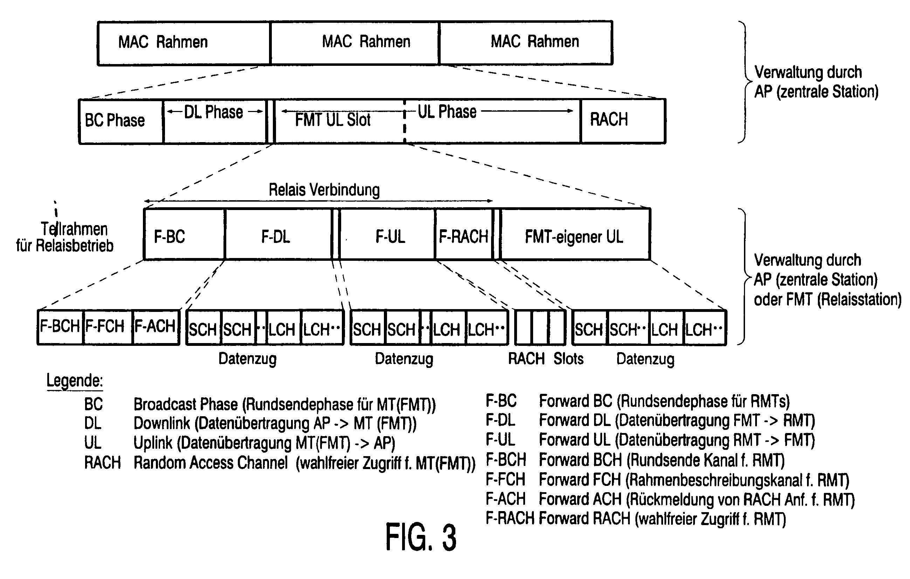

In Fig.3 ist die Erweiterung eines MAC-Rahmens, um einen Teilrahmen für Relaisbetrieb gezeigt, wie in dieser Erfindung für das H/2-System definiert. Der MAC-Rahmen wird durch den AP definiert und dem FMT auf dem Uplink eine bestimmte Übertragungskapazität zugewiesen, die das FMT durch einen Teilrahmen zur Übertragung eigener UL-Daten zum AP sowie Übertragung von UL/DL-Daten zwischen FMT und RMTs beliebig zuweisen kann. Der AP sieht diesem Teilrahmen als FMT-Uplink-Slot, wobei durch geeignete Kennzeichnung der Datenpakete sichergestellt wird, dass Daten, die in dieser Phase für die Relaisverbindung vom FMT zum RMT ausgesandt werden, vom AP nicht als Uplink-Daten des FMT interpretiert werden. In dem Teilrahmen werden wiederum die einzelnen Phasen des H/2 verwendet, jedoch in einer der Teilstruktur angepaßren Form.

In diesem Beispiel versendet das FMT zunächst die für die Organisation der Darenverbindung nötigen Informationen im F-BCH (Forwarder-BCH, einem Rundsendekanal, der vom FMT erzeugt wird und von den RMTs empfangen wird). Anschließend wird den RMTs der weitere Aufbau des Teilrahmens im F-FCH (Forwarder Frame Control Channel) mitgeteilt. Im anschließenden F-ACH (Forwarder Acknowledgement Channel) wird den RMTs der Erfolg für eine Übertragung auf dem später erläuterten F-RACH mitgeteilt. Darauf folgend findet die FDL-Phase (Forwarder Downlink) statt, in der das FMT, Daten an die adressierten RMTs sendet. Dies kann in einer beliebigen Folge von LCH-Datenpaketen (Long Channel, Pakete zu 54 Byte) oder SCH-Darenpaketen (Short Channel, Pakete zu 9 Byte) geschehen. Die einzelnen Pakete können dabei auch zu Paketzügen zusammengefaßt werden. Nach einer Umschaltzeit für den Sender/Empfänger des FMT, kann das FMT Daten im F-UL (Forwarder-Uplink, diese ist eine Verbindung RMT-FMT) von einem RMT empfangen. Dabei können wiederum beliebige Folgen von LCH- und SCH-Darenpaketen auftauchen. In der F-RACH Phase können die RMTs, wahlfrei Daten an das FMT senden, dies geschieht in dem in dieser Erfindung definierte Teilrahmen analog zu den für H/2 bereits festgelegten Mechanismen zum wahlfreien Zugriff. Im Anschluß an die Phasen für die Relaisverbindung schließt das FMT den eigenen Uplink an, um Daten an die zentrale Station des Systems zu versenden. Dabei werden Standardmechanismen des H/2 verwendet.

Die Organisation des Teilrahmens kann sowohl autonom durch das FMT erfolgen, als auch gesteuert durch den AP. Das FMT ist eine drahtlose H/2 Basistation. Das RMT ist ein drahtloses Terminal (MT), wie es gemäß H/2 Standard definiert ist.

Es ist weiterhin möglich, in der F-DL-Phase des FMT ebenfalls wieder einen Teilrahmen für eine kaskadierte Relaisverbindung zu definieren. Somit ergibt sich eine rekursive Struktur von Teilrahmen, deren Tiefe der Anzahl der Teilverbindungen (hops) entspricht.

Der Teilrahmen kann eine gleiche oder eine andere Länge als der Rahmen des AP haben. Es erscheint zweckmäßig zu sein, den Teilrahmen vom FMT periodisch im gleichen Takt zu generieren wie der AP, allerdings mit entsprechendem Versatz, vgl. Fig.3.

### Literatur

[1] DE 195 35 329 A1.
[2] ETSI. Digital cellular telecommunication; Mobile Station - Base Station System (MS-BSS) interface; General Aspects and priciples, GTS GSM 04.01. European Telecommunications Standards Institute, November 1996. EN.
[3] ETSI. Broadband Radio Access (BRAN); High PErformance Radio Local Area Network (HIPERLAN) Type 1; Functional Specification V1.2.1, EN 300 652. European Telecommunications Standards Institute, September 1998. EN.
[4] ETSI. Digital cellular telecommunication (Phase 2+); General Packet Radio Service (GPRS); Overall description of the GPRS radio interface, TR 101350, (GSM 03.64). European Telecommunications Standards Institute, Oktober 1998. EN.
[5] ETSI. Broadband Radio Access Networks (BRAN); HIPERLAN Type 2 Functional Specification Data Link Control (DLC) Layer Part 1 - Basic Data Transport Function, DTS/BRAN030003-1 V0.i. European Telecommunications Standards Institute, September 1999. DTS.
[6] ETSI. Broadband Radio Access Networks (BRAN); HIPERLAN Type 2 Functional Specification Data Link Control (DLC) Layer Part 4 - Extension for Home Environment, DTS/BRAN-0020004-4 V0.a. European Telecommunications Standards Institute, August 1999. DTS.
[7] IEEE. Wireless LAN Medium Access Control (MAC) and Physical Layer (PHY) specifications. Broadband Radio Access (BRAN); Standard 802. 11, IEEE, New York, November 1997. EN.
[8] D. Petras. Entwicklung und Leistungsbewertung einer ATM-Funkschnittstelle. Aachener Beiträge zur Mobil- und Telekommunikation, Band 18, Wissenschaftsverlag Mainz, Aachen, 1999.

## Patentansprüche

1. Verfahren mit drahtlosen Basisstationen in zentral gesteuerten Dienstgüte garantierenden paketvermittelnden Funksystemen mit steuernder Basisstation (AP), mobilen Terminals (MT) und als Relais arbeitende Stationen (FMT) zur Verbindung einer nicht über Funk mit dem AP verbundenen Station (RMT) für bidirektionale Kommunikation zwischen RMT und AP, wobei das FMT über Funk sowohl eine Verbindung zum AP als auch zum RMT unterhält,
**dadurch gekennzeichnet,**
(a) **dass** auf einer systemweit bekannten Rahmenstruktur vom AP eine zeitlich versetzte Teilrahmenstruktur durch das FMT erzeugt wird, die vom FMT zur Steuerung der Übertragung vom FMT zum RMT und zurück eingesetzt wird, wobei in dem Teilrahmen Signalisier-, Nutzdaten und Organisationsdaten über den Aufbau des Teilrahmens zur Steuerung der Übertragung zwischen FMT und RMT übertragen werden, um eine Kommunikation zwischen RMT und AP zu ermöglichen und
(b) **dass** der Aufbau des Teilrahmens dem vom AP erzeugten Rahmen soweit ähnelt, dass ein MT, welches für den Betrieb an einem AP konzipiert ist, auch als RMT dienen kann und den Datenaustausch zwischen RMT und FMT erlaubt.

2. Verfahren nach Anspruch 1,
**dadurch gekennzeichnet,**
**dass** die Organisation der Teilrahmenstrukturen ausschließlich durch eine zentrale Steuerung im AP erfolgt.

3. Verfahren nach einem der voranstehenden Ansprüche,
**dadurch gekennzeichnet,**
**dass** die Organisation der Teilrahmenstrukturen durch eine dezentrale Steuerung in der Relaisstation (FMT) erfolgt.

4. Verfahren nach einem der voranstehenden Ansprüche,
**dadurch gekennzeichnet,**
**dass** die Organisation der Teilrahmenstrukturen z.T. durch eine zentrale Steuerung in der zentralen Station (AP) und z.T. durch eine dezentrale Steuerung in der Relaisstation (FMT) erfolgt.

5. Verfahren nach einem der voranstehenden Ansprüche,
**dadurch gekennzeichnet,**
**dass** ein mobiles Terminal (MT) AP werden kann und die Rolle einer zentralen Station übernimmt (sofern dies systembedingt möglich ist), wobei es relativ zu ihm RMTs gibt.

6. Verfahren nach einem der voranstehenden Ansprüche,
**dadurch gekennzeichnet,**
**dass** eine Kaskadierung der Relaisfunktion möglich ist, wobei ein aus der Sicht eines FMT als RMT gesteuerte Station auch gleichzeitig FMT bzgl. einer anderen Station sein kann und sich innerhalb der ursprünglichen Teilrahmenstruktur rekursiv weitere Teilrahmenstrukturen ausbilden, deren Tiefe der Anzahl der benutzten Teilstrecken (hops) zwischen AP und entferntestem RMT in der Kaskade entsprechen.

7. Verfahren nach einem der voranstehenden Ansprüche,
**dadurch gekennzeichnet,**
**dass** eine zentrale Station (AP) jeweils mehrere Terminals (MT) und Relaisstationen (FMT) versorgen kann, wobei jedes MT die Funktionalität eines FMT beinhalten kann.

8. Verfahren nach einem der voranstehenden Ansprüche,
**dadurch gekennzeichnet,**
**dass** das FMT gleichzeitig mehrere RMTs versorgen kann.

9. Verfahren nach einem der voranstehenden Ansprüche,
**dadurch gekennzeichnet,**
**dass** die Zuteilung der Kapazität für die Relaistrecke im Zeitbereich (TDMA) in geeigneten Systemen, aber auch im Frequenzbereich (FDMA) oder Codebereich (CDMA) erfolgen kann.

10. Verfahren nach einem der voranstehenden Ansprüche,
**dadurch gekennzeichnet,**
**dass** es mehrere FMTs geben kann, die gleichzeitig in verschiedenen Bereichen der Zelle mit ihnen assoziierte RMTs versorgen, wobei Teilrahmen zeitgleich an verschiedenen Orten der Zelle versendet werden.

11. Verfahren nach einem der voranstehenden Ansprüche,
**dadurch gekennzeichnet,**
**dass** die Länge der Rahmen von AP und Teilrahmen von FMT dynamisch variieren und unterschiedlich sein kann.

12. Verfahren nach einem der voranstehenden Ansprüche,
**dadurch gekennzeichnet,**
**dass** die Anordnung der einzelnen Phasen innerhalb der Teilrahmen dynamisch geändert, aufgeteilt, teilweise fehlen kann und zusätzlich neue Phasen definiert sein können.

13. Verfahren nach einem der voranstehenden Ansprüche,
**dadurch gekennzeichnet,**
**dass** ein direkter Datenaustausch durch Steuerung eines gemeinsamen FMTs zwischen den zugehörigen RMTs erfolgt.

14. Verfahren nach einem der voranstehenden Ansprüche,
**dadurch gekennzeichnet,**
**dass** ein direkter Datenaustausch zwischen MT, gesteuert durch den AP und RMT, gesteuert durch das zugehörige FMT, erfolgt.

15. Verfahren nach einem der voranstehenden Ansprüche
**dadurch gekennzeichnet,**
**dass** ein Rundsendemodus (point-to-multipoint) für Nutzdacenübermittlung wird.

## Claims

1. A method with wireless base stations in centrally controlled radio systems, which systems transfer packets and guarantee service quality and comprise a controlling base station (AP), mobile terminals (MT) and stations working as a relay (FMT) for the connection of a station (RMT) not connected to the AP by radio for bidirectional communication between RMT and AP, the FMT maintaining both a connection to the AP and to the RMT by radio, **characterized in that**
(a) a time-shifted partial frame structure is generated by the FMT based on a system-wide known frame structure of the AP, which partial frame structure is used by the FMT to control the transmission from the FMT to the RMT and back, while the partial frames transport signaling data, useful data and organization data about the structure of the partial frame for controlling the transmission between FMT and RMT to enable a communication between RMT and AP, and
(b) **in that** the structure of the partial frame is so similar to the frame generated by the AP that an MT, which is designed for the operation at an AP, can also serve as an RMT and permits the exchange of data between RMT and FMT.

2. A method as claimed in claim 1, **characterized in that** the organization of the partial frame structures is exclusively effected by a central controller in the AP.

3. A method as claimed in one of the preceding claims, **characterized in that** the organization of the partial frame structures is effected by a decentralized control in the relay station (FMT).

4. A method as claimed in one of the preceding claims, **characterized in that** the organization of the partial frame structures is partly effected by a central controller in the central station (AP) and partly by a decentralized controller in the relay station (FMT).

5. A method as claimed in one of the preceding claims, **characterized in that** a mobile terminal (MT) can become the AP and take over the role of a central station (in so far this is possible with the system), while there are RMTs with respect to the AP.

6. A method as claimed in one of the preceding claims, **characterized in that** a cascading of the relay function is possible while a station controlled as an RMT seen from the point of view of an FMT can simultaneously be an FMT with respect to another station, and in the original partial frame structure further partial frame structures are recursively formed of which the depth corresponds to the number of the hops used between AP and the most remote RMT in the cascade.

7. A method as claimed in one of the preceding claims, **characterized in that** a central station (AP) can cover a plurality of terminals (MT) and relay stations (FMT) while each MT can have the functionality of an FMT.

8. A method as claimed in one of the preceding claims, **characterized in that** the FMT can simultaneously cover a plurality of RMTs.

9. A method as claimed in one of the preceding claims, **characterized in that** the assignment of the capacity for the relay link in the time domain (TDMA) can be effected in suitable systems, but also in the frequency domain (FDMA) or code domain (CDMA).

10. A method as claimed in one of the preceding claims, **characterized in that** there may be a plurality of FMTs that simultaneously cover their associated RMTs in various areas of the cell, while partial frames are simultaneously transmitted at different spots in the cell.

11. A method as claimed in one of the preceding claims, **characterized in that** the length of the frames of AP and partial frames of FMT can dynamically vary and be different.

12. A method as claimed in one of the preceding claims, **characterized in that** the arrangement of the individual phases in the partial frames is dynamically changed, divided, can partly fail and new phases can additionally be defined.

13. A method as claimed in one of the preceding claims, **characterized in that** a direct exchange of data is effected between the associated RMTs by controlling a common FMT.

14. A method as claimed in one of the preceding claims, **characterized in that** a direct exchange of data is effected between MT, controlled by the AP, and RMT, controlled by the associated FMT.

15. A method as claimed in one of the preceding claims, **characterized in that** a point-to-multipoint mode is used for transferring useful data.

## Revendications

1. Procédé avec des stations de base sans fil dans des systèmes radio à commutation par paquets garantissant la qualité de service et commandés centralement avec une station de base (AP) de commande, des terminaux mobiles (MT) et des stations fonctionnant comme un relais (FMT) en vue de la liaison d'une station (RMT) liée par radio avec l'AP pour la communication bidirectionnelle entre le RMT et l'AP, le FMT entretenant par radio à la fois une liaison vers l'AP et aussi vers le RMT,
**caractérisé en ce**
(a) **qu'**une structure de cadre partiel à décalage temporel est produite par le FMT sur une structure cadre connue dans tout le système et est utilisée par le FMT pour la commande de la transmission du FMT vers le RMT et inversement, des données de signalisation, des données utiles et des données organisationnelles à propos de la conception du cadre partiel étant transmises dans le cadre partiel pour la commande de la transmission entre le FMT et le RMT afin de permettre une communication entre le RMT et l'AP et
(b) **que** la structure du cadre partiel ressemble au cadre produit par l'AP dans la mesure où un MT qui est conçu pour son fonctionnement sur un AP peut également servir de RMT et permet l'échange de données entre le RMT et le FMT.

2. Procédé selon la revendication 1,
**caractérisé en ce**
**que** l'organisation des structures de cadre partiel intervient exclusivement par une commande centrale dans l'AP.

3. Procédé selon l'une des revendications précédentes,
**caractérisé en ce**
**que** l'organisation des structures de cadre partiel est effectuée par une commande décentralisée dans la station de relais (FMT).

4. Procédé selon l'une des revendications précédentes, **caractérisé en ce que** l'organisation des structures de cadre partiel intervient en partie par une commande centrale dans la station centrale (AP) et en partie par une commande décentralisée dans la station de relais (FMT).

5. Procédé selon l'une des revendications précédentes,
**caractérisé en ce**
**qu'**un terminal mobile (MT) peut devenir AP et jouer le rôle d'une station centrale (dans la mesure où le système le permet), auquel cas il y a des RMT par rapport à lui.

6. Procédé selon l'une des revendications précédentes,
**caractérisé en ce**
**qu'**une cascade de la fonction de relais est possible, une station commandée comme un RMT par rapport à un FMT pouvant aussi être simultanément un FMT par rapport à une autre station et qu'il se forme de manière récursive dans la structure de cadre partiel initiale d'autres structures de cadre partiel dont la profondeur correspond au nombre des tronçons partiels (hops) utilisés entre l'AP et le RMT le plus éloigné dans la cascade.

7. Procédé selon l'une des revendications précédentes,
**caractérisé en ce**
**qu'**une station centrale (AP) peut alimenter respectivement plusieurs terminaux (MT) et stations de relais (FMT), chaque MT pouvant contenir la fonctionnalité d'un FMT.

8. Procédé selon l'une des revendications précédentes,
**caractérisé en ce**
**que** le FMT peut desservir simultanément plusieurs RMT.

9. Procédé selon l'une des revendications précédentes,
**caractérisé en ce**
**que** l'attribution de la capacité pour le tronçon de relais peut intervenir dans la gamme temporelle (TDMA) dans des systèmes appropriés mais aussi dans la gamme de fréquence (FDMA) ou de la gamme de code (CDMA).

10. Procédé selon l'une des revendications précédentes, **caractérisé en ce**
**qu'**il peut y avoir plusieurs FMT qui desservent simultanément dans différentes zones de la cellule des RMT associés à eux, les cadres partiels étant transmis en même temps à différents endroits de la cellule.

11. Procédé selon l'une des revendications précédentes,
**caractérisé en ce**
**que** la longueur des cadres de l'AP et des cadres partiels du FMT peut varier dynamiquement et être différente.

12. Procédé selon l'une des revendications précédentes,
**caractérisé en ce**
**que** l'agencement des différentes phases au sein des cadres partiels peut varier dynamiquement, être distribué, en partie absent et que de nouvelles phases peuvent en plus être définies.

13. Procédé selon l'une des revendications précédentes,
**caractérisé en ce**
**qu'**un échange de données direct est effectué par commande de FMT communes entre les RMT correspondants.

14. Procédé selon l'une des revendications précédentes,
**caractérisé en ce**
**qu'**il se produit un échange direct de données entre le MT commandé par l'AP et le RMT, commandée par le FMT correspondante.

15. Procédé selon l'une des revendications précédentes,
**caractérisé en ce**
**qu'**un mode de diffusion (point-to-multipoint) est utilisé pour la transmission de données utiles.
